(19) Europäisches Patentamt

European Patent Office

Office européen des brevets

(11) Veröffentlichungsnummer: **0 257 190 B1**

(12) **EUROPÄISCHE PATENTSCHRIFT**

(45) Veröffentlichungstag der Patentschrift: **18.03.92**

(21) Anmeldenummer: **87105935.8**

(22) Anmeldetag: **23.04.87**

(51) Int. Cl.⁵: **B62D 17/00**, B60G 13/00

(54) **Vorrichtung zum Einstellen von Rädern eines Kraftfahrzeugs, insbesondere zum Einstellen eines Radsturzes.**

(30) Priorität: **29.08.86 DE 3629431**

(43) Veröffentlichungstag der Anmeldung:
**02.03.88 Patentblatt 88/09**

(45) Bekanntmachung des Hinweises auf die
Patenterteilung:
**18.03.92 Patentblatt 92/12**

(84) Benannte Vertragsstaaten:
**DE ES FR GB IT NL SE**

(56) Entgegenhaltungen:
**DE-A- 2 327 609**
**US-A- 4 577 534**

(73) Patentinhaber: **Dr.Ing.h.c. F. Porsche Aktiengesellschaft
Porschestrasse 42
W-7000 Stuttgart 40(DE)**

(72) Erfinder: **Woehler, Hans-Jürgen, Dipl.-Ing.
Patronatstrasse 6
W-7254 Hemmingen(DE)**

Rank Xerox (UK) Business Services

**Beschreibung**

Die Erfindung bezieht sich auf eine Vorrichtung nach der im Oberbegriff des Anspruchs 1 umschriebenen und durch die US-A-4 577 534 bekannten Bauart.

Aus der DE-A 23 27 609 ist eine Vorrichtung zum Einstellen des Sturzes der Räder eines Kraftfahrzeugs bekannt, bei der am unteren Federbeinende Befestigungsschrauben zum Radträger vorgesehen sind. Eine der Schrauben ist als Einstellelement für den Radsturz ausgebildet und weist kopfseitig eine mit der Schraube fest verbundene Exzenterscheibe auf, die zwischen Abstützungen einer Federbeinschelle angeordnet ist. Am freien Ende der Schraube ist ebenfalls eine Exzenterscheibe vorgesehen, die aufgesteckt und mit der Schraube verdrehbar gehalten wird. Zum Einstellen des Radsturzes wird die Schraube mit der fest verbundenen kopfseitigen Exzenterschraube verdreht, so daß die in einem Querschlitz der Schelle geführte Schraube in Querrichtung bewegbar ist. Desweiteren ist aus der US-A-45 77 534 eine Einstellvorrichtung für den Sturz eines Kraftfahrzeugrades bekannt, die ein Stellwerkzeug mit einer mit einem Innensechskant versehenen Nuß umfasst. Mit dieser ist eine Exzenterscheibe verbunden, die nach einem Aufsetzen der Nuß auf dem Sechskantkopf einer Befestigungsschraube zwischen gegenüberstehenden Rampen verdrehbar ist. Hierdurch wird die Befestigungsschraube im Schlitz entsprechend der gewünschten Sturzverstellung verschoben. Ein Festsetzen der Befestigungsschraube erfolgt mittels einer Mutter, die über ein Gegenwerkzeug festziehbar ist.

Die Aufgabe der Erfindung besteht darin, eine Einstellvorrichtung für einen Radsturz zu schaffen, die aus wenigen einfachen Bauteilen besteht und eine kontinuierliche Sturzeinstellung gewährleistet.

Diese Aufgabe wird erfindungsgemäß durch die kennzeichnenden Merkmale des Anspruchs 1 gelöst. Weitere vorteilhafte Ausbildungen der Erfindung beinhalten die Unteransprüche.

Zum kontinuierlichen Einstellen des Radsturzes wird eine abnehmbare Exzenterhülse verwendet, bei der ein unteres zylindrisches Teil eine den zylindrisch ausgebildeten Kopf der Befestigungsschraube aufnehmende, exzentrisch angeordnete zylindrische Bohrung aufweist, welche im Abstand zu einer zentrischen Achse des Schraubenkopfes angeordnet ist. Hierdurch kann sich die Exzenterhülse auf dem zylindrischen Kopf der Befestigungsschraube zwischen gegenüberstehenden Abstützungen verdrehen, wobei eine Verschiebung der Befestigungsschraube im Querschlitz erfolgt. Zum Festziehen der Schraube wird in einen Innensechskant des Schraubenkopfes ein entsprechend ausgebildeter Schlüssel gesteckt, so daß über die Mutter ein Festziehen der Schraube erfolgt. Damit dieses Festziehen der Schraube auch bei aufgesteckter Exzenterhülse durchführbar ist, weist diese eine Durchstecköffnung für den Innensechskantschlüssel auf.

Ein Ausführungsbeispiel der Erfindung ist in der Zeichnung dargestellt und wird im folgenden näher beschrieben.

Es zeigt

Fig. 1     eine Vorderansicht eines Federbeines mit Befestigungsschraube und Einstellelement,

Fig. 2     einen Schnitt nach der Linie II-II der Figur 1,

Fig. 3     einen Schnitt nach der Linie II-II der Figur 1 mit eingestecktem inneren Sechskantschlüssel sowie einem außen angreifenden Gabelschlüssel, wobei diese Darstellung ansonsten der Figur 2 entspricht,

Fig. 4     eine Ansicht auf Figur 2 in Pfeilrichtung B gesehen,

Fig. 5     einen Teilschnitt nach der Linie V-V der Figur 2 gesehen,

Fig. 6     eine Ansicht auf Figur 5 in Pfeilrichtung C gesehen,

Fig. 7     eine Seitenansicht einer Exzenterhülse,

Fig. 8     einen Vertikalschnitt durch die Exzenterhülse,

Fig. 9     eine Draufsicht auf die Exzenterhülse und

Fig. 10     eine Darstellung gemäß Figur 2 mit einer am freien Ende der Schraube angeordneten Exzenterscheibe.

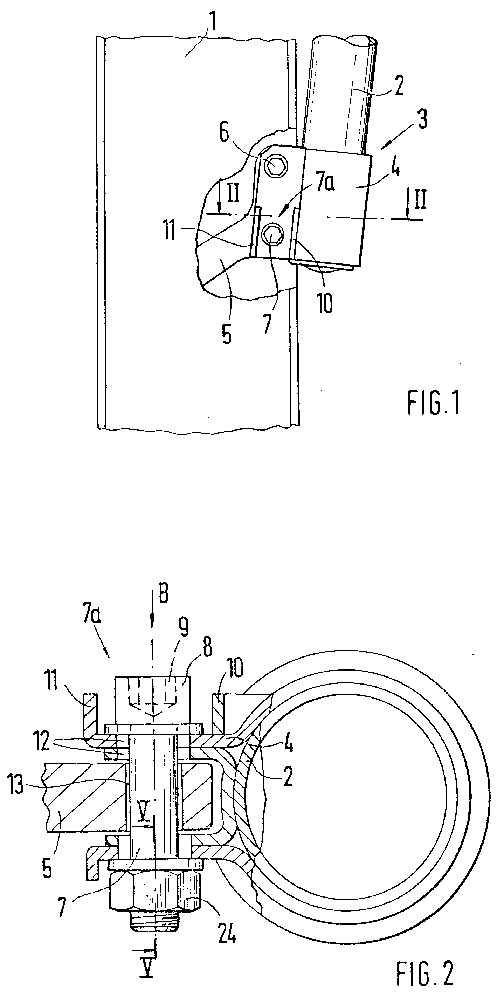

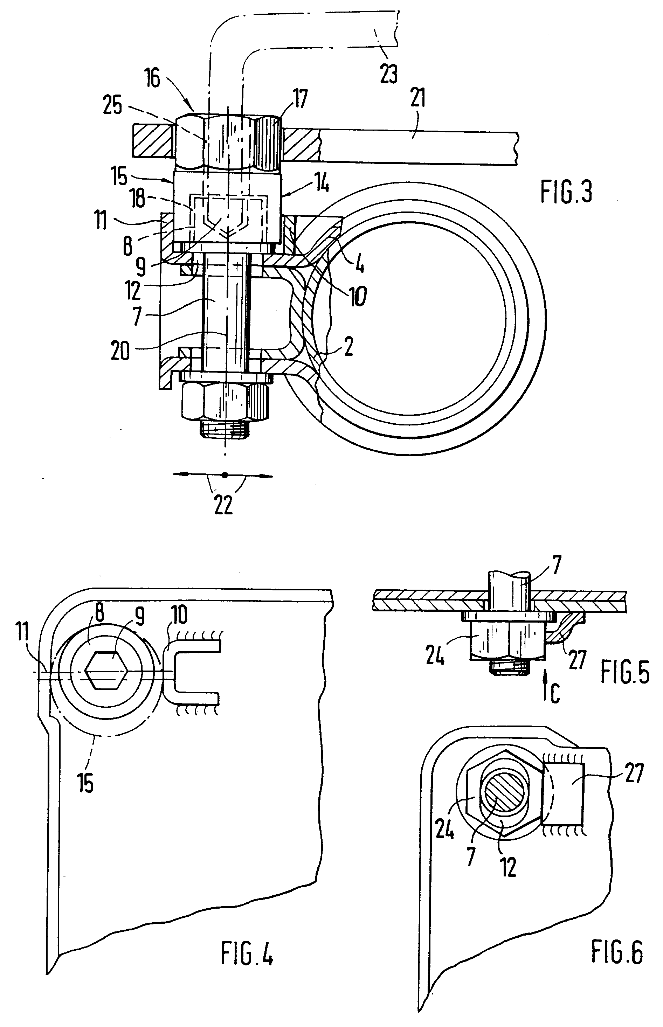

In Fig. 1 ist das Vorderrad 1 eines Kraftfahrzeugs über ein Federbein 2 und einen Querlenker (nicht gezeigt) am Fahrzeugrahmen bzw. Fahrzeugaufbau aufgehängt. Das Federbein 2 ist mit seinem oberen Ende am Fahrzeugaufbau abgestützt und mit seinem unteren Ende 3 z. B. über eine Schelle 4 mit einem Arm 5 eines Radträgers verbunden. Zum Verbinden dienen zwei Schrauben 6 und 7, welche sich in Fahrzeuglängsrichtung erstrecken und vorzugsweise übereinander angeordnet sind.

Eine der Befestigungsschrauben im dargestellten Ausführungsbeispiel z. B. die untere Schraube 7 ist gleichzeitig als Einstellelement 7a für den Radsturz ausgebildet. Sie umfaßt einen zylindrischen Schraubenkopf 8 mit einem Innensechskant 9, wobei dieser Kopf 8 zwischen gegenüberstehenden Anstützungen 10 und 11 der Schelle 4 angeordnet ist. In der Schelle 4 ist die Schraube 7 in einem Querschlitz 12 verschiebbar gehalten, wobei der Arm 5 des Radträgers nur eine Bohrung 13 aufweist und unmittelbar von der Schraube 7 mitgenommen wird.

Zum kontinuierlichen Verstellen des Radsturzes dient eine Exzenterhülse 14, die einen unteren zylindrischen Teil 15 und einen oberen Teil 16 mit einem Außensechskant 17 aufweist. Im zylindrischen Teil 15 ist eine zum zylindrischen Schraubenkopf 8 mit der Achse 20 angeordnete exzentrische Bohrung 18 vorgesehen, die eine Achse 19 aufweist.

Zur Sturzverstellung wird die Exzenterhülse 14 auf den zylindrischen Schraubenkopf 8 gesteckt und zwischen die beiden Abstützungen 10 und 11 gesetzt. Über einen Schraubenschlüssel 21 oder dergleichen wird die Exzenterhülse 14 zwischen diesen Abstützungen 10 und 11 verdreht, wobei sich die Schraube 7 aufgrund der exzentrischen Bohrung 18 in der Hülse 14 im Schlitz 12 der Schelle 4 unter Mitnahme des Radträgers und damit des Rades in Querrichtung 22 verschiebt.

In der Hülse 14 ist eine an die exzentrisch angeordnete zylindrische Bohrung 18 im Teil 15 anschließende, im Durchmesser kleinere Bohrung 25 vorgesehen. Diese verläuft koaxial zum Innensechskant 9 im Schraubenkopf 8 und dient zur Einführung eines Innensechskantschlüssels 23. Über diesen wird die Schraube 7 bei einem Anziehen nach der Sturzeinstellung festgehalten.

Am freien Ende der Schraube 7 ist eine Mutter 24 der Befestigungsschraube 7 an einer Abstützung 27 anliegend, die sich parallel zum Querschlitz 12 erstreckt und ein Vor- und Anziehen der Schraube 7 ohne Gegenschlüssel erlaubt.

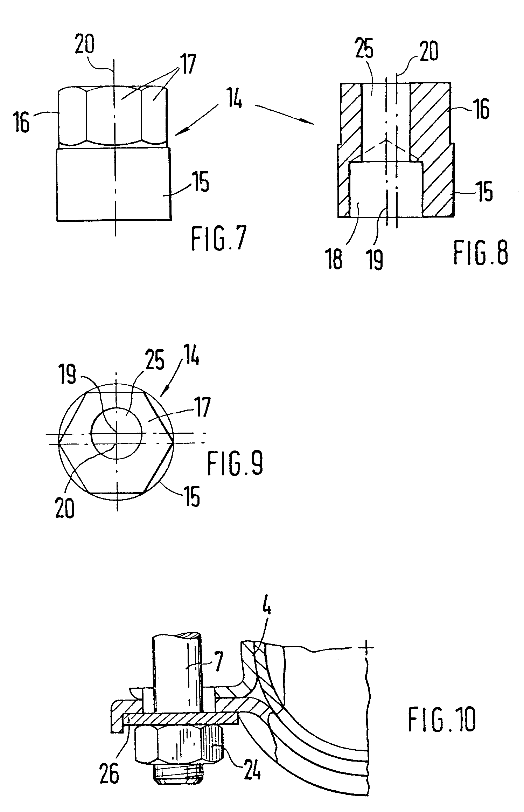

Zur Abstützung der Schraube 7 an der Schelle 4 kann nach einer weiteren Ausführung der Vorrichtung auch eine Exzenterscheibe 26 (Fig. 10) dienen, die mit der Schraube 7 verdrehbar auf dieser gehalten wird.

**Patentansprüche**

1. Vorrichtung zum Einstellen von Rädern eines Kraftfahrzeugs, insbesondere zum Einstellen eines Radsturzes, wobei die Räder (1) über Lenker und Federbeine (2) am Fahrzeugaufbau gehalten sind und deren Radträger einerseits gelenkig am verschwenkbaren Lenker und andererseits über Befestigungsschrauben (6 oder 7) einstellbar mit dem unteren Ende (3) des Federbeines (2) verbunden ist und mindestens zwei in Fahrzeuglängsrichtung angeordnete Schrauben (6 und 7) zur lösbaren Verbindung mit dem Radträger umfasst, wobei mindestens eine der Befestigungsschrauben (6 oder 7) als Teil eines Einstellelements (7a) ausgebildet ist und ein Kopf (8) des Elements (7a) mit einer formschlüssig aufsteckbaren und lösbaren Exzenterhülse (14) eines handhabbaren Stellwerkzeugs (21) verbunden ist und die Exzenterhülse (14) zwischen gegenüberliegenden Abstützungen (10, 11) einer unteren Befestigungsschelle (4) des Federbeines (2) um eine zentrische Achse (20) der Schraube (7) derart verdrehbar ist, daß eine radverstellende Verschiebung der Schraube (7) in einem Querschlitz (12) erfolgt, **dadurch gekennzeichnet**, daß ein unteres zylindrisches Teil (15) der Exzenterhülse (14) eine den zylindrisch ausgebildeten Kopf (8) der Befestigungsschraube (7) aufnehmende, exzentrisch angeordnete zylindrische Bohrung (18) mit einer Längsachse (19) aufweist, welche im Abstand zu einer zentrischen Achse (20) des zylindrischen Teils (15) angeordnet ist und der Schraubenkopf (8) einen Innensechskant (9) zum Eingriff eines Stellschlüssels (23) aufweist und die Exzenterhülse (14) eine an die im unteren Teil (15) vorgesehene zylindrische Bohrung (18) anschließende weitere im Durchmesser kleinere zylindrische Bohrung (25) im oberen Teil (16) der Exzenterhülse (14) umfasst, die mit dem Innensechskant (9) des Schraubenkopfes (8) koaxial verlaufend angeordnet ist und deren Durchmesser mindestens so groß wie der maximale Durchmesser des Innensechskants ist.

2. Vorrichtung nach Anspruch 1, **dadurch gekennzeichnet**, daß die Exzenterhülse (14) einen an den unteren zylindrischen Teil (15) und einen anschließenden oberen Teil (16) mit einem Außensechskant (17) aufweist.

3. Vorrichtung nach den Ansprüchen 1 oder 2, **dadurch gekennzeichnet**, daß mit dem freien Ende des Schraubenschaftes des Einstellelementes (7a) eine Exzenterscheibe (26) verdrehbar mit der Schraube (7) verbunden ist, die an gegenüberliegenden Abstützungen anliegt.

**Claims**

1. A device for adjusting wheels of a motor vehicle, in particular for adjusting a wheel camber, the wheels (1) being held on the vehicle body by way of suspension arms and telescopic legs (2) and the wheel support thereof being connected at one end in an articulated manner to the pivotable sus-pension arm and at the other end in an adjustable manner by way of fastening bolts (6 or 7) to the lower end (3) of the telescopic leg (2) and embracing at least two bolts (6 and 7) arranged in the longitudinal direction of the vehicle for detachable connexion to the wheel support, at least one of the fastening bolts (6 or 7) being constructed as part of an adjustment member (7a) and a head (8) of the member (7a) being connected to an eccentric sleeve (14) of a hand-operated adjustment tool (21), the eccentric sleeve (14) being attachable in a positively locking manner and being releasable and being rotatable about a central axis (20) of the bolt (7) between opposite supports (10, 11) of a lower fastening bracket (4) of the telescopic leg (2) in such a way that there is a displacement of the bolt (7) in a transverse slot (12) so as to adjust the wheel, characterized in that a lower cylindrical part (15) of the eccentric sleeve (14) has an eccentrically arranged cylindrical bore (18) receiving the cylindrically formed head (8) of the fastening bolt (7) and having a longitudinal axis (19) which is arranged at a distance from a central axis (20) of the cylindrical part (15), and the bolt head (8) having an hexagonal recess (9) for engaging with an adjusting key (23) and the eccentric sleeve (14) having a further cylindrical bore (25) - smaller in diameter and connected to the cylindrical bore (18) provided in the lower part (15) - in the upper part (16) of the eccentric sleeve (14) which is arranged extending coaxially with the hexagonal recess (9) of the bolt head (8) and the diameter of which is at least as great as the maximum diameter of the hexagonal recess.

2. A device according to Claim 1, characterized in that the eccentric sleeve (14) has a ... on the lower cylindrical part (15) and an adjoining upper part (16) with an hexagonal head (17).

3. A device according to Claim 1 or 2, characterized in that an eccentric disc (26) is connected to the free end of the bolt shank of the adjustment member (7a) so as to be rotatable with the bolt (7) resting on opposing supports.

**Revendications**

1. Dispositif pour le réglage des roues d'un véhicule automobile, notamment pour le réglage du carrossage, les roues (1) étant maintenues sur la carrosserie du véhicule par des bras oscillants et des jambes de force à ressort (2) et dont le support de roue est relié d'une part articulé sur le bras pivotant et d'autre part, de façon réglable par des vis de fixation (6 ou 7), avec l'extrémité inférieure (3) de la jambe de force à ressort (2) et comporte au moins deux vis (6 et 7) placées dans la direction longitudinale du véhicule pour l'assemblage amovible avec le support de roue, l'une au moins des vis de fixation (6 ou 7) faisant partie d'un élément de réglage (7a) et une tête (8) de l'élément (7a) étant reliée à une douille d'excentrique (14) amovible et à emboîter par concordance de forme, d'un outil de réglage (21) manipulable et la douille d'excentrique (14) pouvant tourner entre des appuis (10, 11) envis-à-vis d'un collier de fixation (4) inférieur de la jambe de force (2), autour d'un axe (20) centré de la vis (7), de manière qu'il se produise un déplacement, réglant la roue, de la vis (7) dans une fente transversale (12), caractérisé en ce qu'une partie cylindrique (15) inférieure de la douille d'excentrique (14) comporte un trou (18) cylindrique placé excentré, logeant la tête (8) cylindrique de la vis de fixation (7), avec un axe longitudinal (19) qui est espacé d'un axe (20) centré de la partie cylindrique (15) et en ce que la tête de vis (8) est à six pans creux (9) pour l'engagement d'une clé de réglage (23) et la douille d'excentrique (14) comporte un autre trou cylindrique (25), de plus petit diamètre, se raccordant au trou (18) cylindrique prévu dans la partie inférieure (15), dans la partie supérieure (16) de la douille d'excentrique (14), lequel trou est coaxial aux six pans creux (9) de la tête de vis (8) et dont le diamètre est au moins aussi grand que le diamètre maximal de la tête à six pans creux.

2. Dispositif selon la revendication 1, caractérisé en ce que la douille d'excentrique (14) comporte une partie cylindrique (15) inférieure et une partie supérieure (16) s'y raccordant avec une hexagone mâle (17).

3. Dispositif selon la revendication 1 ou 2, caractérisé en ce qu'un disque d'excentrique (26) est relié tournant, par l'extrémité libre de la tige de vis de l'élément de réglage (7a), avec la vis (7) qui s'applique contre des appuis en vis-à-vis.

FIG.1

FIG.2

FIG.3

FIG.4

FIG.5

FIG.6

FIG.7

FIG.8

FIG.9

FIG.10